(19) Europäisches Patentamt
European Patent Office
Office européen des brevets

(11) **EP 2 157 862 B1**

(12) **EUROPÄISCHE PATENTSCHRIFT**

(45) Veröffentlichungstag und Bekanntmachung des Hinweises auf die Patenterteilung:
**30.03.2016 Patentblatt 2016/13**

(21) Anmeldenummer: **08802896.4**

(22) Anmeldetag: **05.06.2008**

(51) Int Cl.:
*A01N 43/80* (2006.01)    *A01N 35/02* (2006.01)
*A01P 1/00* (2006.01)    *A01P 3/00* (2006.01)

(86) Internationale Anmeldenummer:
**PCT/EP2008/057020**

(87) Internationale Veröffentlichungsnummer:
**WO 2008/148855 (11.12.2008 Gazette 2008/50)**

(54) **BIOZIDZUSAMMENSETZUNG ENTHALTEND GLUTARALDEHYD UND MINDESTENS EIN ISOTHIAZOLINON**

BIOCIDE COMPOSITION CONTAINING GLUTARALDEHYDE AND AT LEAST ONE ISOTHIAZOLINONE

COMPOSITION BIOCIDE CONTENANT DU GLUTARALDEHYDE ET AU MOINS UNE ISOTHIAZOLINONE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.06.2007   EP 07109610**
**22.08.2007   EP 07114735**

(43) Veröffentlichungstag der Anmeldung:
**03.03.2010 Patentblatt 2010/09**

(73) Patentinhaber: **THOR GmbH**
**67346 Speyer (DE)**

(72) Erfinder:
• **GRABBE, Roman**
**67435 Neustadt (DE)**
• **WUNDER, Thomas**
**67435 Neustadt (DE)**
• **BAUM, Rüdiger**
**68753 Waghäusel (DE)**

(56) Entgegenhaltungen:
**EP-A- 0 393 948     WO-A-02/088043**
**US-A- 4 539 071**

**Beschreibung**

Die Erfindung betrifft eine Biozidzusammensetzung, die als mikrobiozide Wirkkomponenten Glutaraldehyd und als weitere(n) Bestandteil(e) ein oder mehrere Isothiazolin-3-onderivat(e) ausgewählt aus der Gruppe bestehend aus N-Alkyl-1,2-benzisothiazolin-3-onen und 2-n-Octylisothiazolin-3-on (OIT), enthält.

Biozide Mittel werden in vielen Bereichen eingesetzt, beispielsweise zur Bekämpfung von Bakterien, Pilzen und Algen. Es ist seit langem bekannt, in solchen bioziden Mitteln Isothiazolin-3-one (die auch als 3-Isothiazolone bezeichnet werden) einzusetzen, da sich unter dieser Verbindungsklasse sehr wirksame biozide Verbindungen befinden.

Eine der vorstehend genannten wirksamen bioziden Verbindungen ist 5-Chlor-2-methylisothiazolin-3-on. Diese Verbindung weist zwar eine gute biozide Wirkung auf, hat jedoch bei ihrer praktischen Handhabung verschiedene Nachteile. Beispielsweise löst die Verbindung bei Personen, die damit umgehen, häufig Allergien aus. Auch bestehen in manchen Ländern gesetzliche Beschränkungen für den AOX-Wert, d.h. es darf im Wasser eine bestimmte Konzentration von an Aktivkohle absorbierenden organischen Chlor-, Brom- und Iodverbindungen nicht überschritten werden. Dies verhindert dann den Einsatz von 5-Chlor-2-methylisothiazolin-3-on im gewünschten Umfang. Ferner ist die Stabilität dieser Verbindung unter bestimmten Bedingungen, z. B. bei hohen pH-Werten oder in Anwesenheit von Nukleophilen oder Reduktionsmitteln, nicht ausreichend.

Ein weiteres bekanntes Isothiazolin-3-on mit biozider Wirkung ist das 2-Methyl-isothiazolin-3-on. Diese Verbindung vermeidet zwar verschiedene Nachteile des 5-Chlor-2-methylisothiazolin-3-ons, beispielsweise das oben erwähnte Allergierisiko, hat aber eine wesentlich geringere biozide Wirkung. Ein einfacher Austausch von 5-Chlor-2-methylisothiazolin-3-on durch 2-Methylisothiazolin-3-on ist daher ohne weiteres nicht möglich.

Ebenfalls ist es bekannt, eine Kombination aus verschiedenen Isothiazolin-3-onen zu benutzen. Beispielsweise offenbart die EP 0 676 140 A1 eine synergistische biozide Zusammensetzung, die 2-Methylisothiazolin-3-on (2-Methyl-3-isothiazolon) und 2-n-Octylisothiazolin-3-on (2-n-Octyl-3-isothiazolon) enthält.

Aus der EP 1 005 271 B1 sind weitere Biozidzusammensetzungen bekannt, die eine synergistische Wirkstoffkombination aus 2-Methylisothiazolin-3-on und 1,2-Benzisothiazolin-3-on enthalten. Diese Biozidzusammensetzungen sind frei von 5-Chlor-2-methylisothiazolin-3-on.

Ebenfalls offenbart die EP 1 030 558 B1 eine synergistische Biozidzusammensetzung, die 2-Methylisothiazolin-3-on und 3-Iod-2-propinyl-N-butylcarbamat enthält. Diese synergistische Zusammensetzung eignet sich bereits in geringen Konzentrationen zur Bekämpfung schädlicher Mikroorganismen.

Weitere Biozidzusammensetzungen, welche durch geeignete Auswahl der mikrobioziden Wirkkomponenten eine synergistische Wirkung enthalten, sind in der EP 0 393 948 A1 offenbart. Diese Druckschrift offenbart Zusammensetzungen, die 1,2-Benzisothiazolin-3-on, Wasser, ein Puffermittel sowie eine ausreichende Menge an Glutaraldehyd enthalten. Als Puffermittel finden hierbei insbesondere Essigsäure und Natriumacetat Verwendung.

Ausgehend von dem Stand der Technik liegt der Erfindung die Aufgabe zugrunde, eine weitere Biozidzusammensetzung zur Verfügung zu stellen, deren mikrobiozide Wirkkomponenten synergistisch zusammenwirken und deshalb beim gleichzeitigen Einsatz in geringeren Konzentrationen verwendet werden können, verglichen mit den nötigen Konzentrationen im Falle der Einzelkomponenten.

Diese Aufgabe löst die Erfindung durch eine Biozidzusammensetzung, enthaltend als mikrobiozide Wirkkomponenten Glutaraldehyd und als weitere(n) Bestandteil(e) ein oder mehrere Isothiazolin-3-onderivat(e) ausgewählt aus der Gruppe bestehend aus N-Alkyl-1,2-benzisothiazolin-3-onen und 2-n-Octylisothiazolin-3-on (nachfolgend auch OIT genannt).

Von den N-Alkyl-1,2-benzisothiazolin-3-onen kann ein einziges eingesetzt werden. Es können aber auch 2 oder mehrere N-Alkyl-1,2- benzisothiazolin-3-one eingesetzt werden. Weiterhin kann erfindungsgemäß entweder ein N-Alkyl-1,2- benzisothiazolin-3-on oder OIT eingesetzt werden, jeweils in Kombination mit Glutaraldehyd. Es ist auch möglich,

OIT und ein oder mehrere N-Alkyl-1,2- benzisothiazolin-3-one in Kombination mit Glutaraldehyd einzusetzen.

Bevorzugte N-Alkyl-1,2-benzisothiazolin-3-one sind solche mit $C_{1-5}$-Alkyl. Beispiele dieser Verbindungen schließen N-n-Butyl-, N-Methyl-, N-Ethyl-, N-n-Propyl-, N-Isopropyl-, N-n-Pentyl-, N-Cyclopentyl-, N-Isobutyl- und N-tert.-Butyl-1,2-benzisothiazolin-3-on ein. Besonders bevorzugt ist das N-Alkyl-1,2-benzisothiazolin-3-on das N-Methyl-1,2-benzisothiazolin-3-on oder das N-n-Butyl-1,2-Benzisothiazolin-3-on.

Die erfindungsgemäße Biozidzusammensetzung hat den Vorteil, dass ihre Isothiazolin-3-on-Wirkkomponente(n) synergistisch mit dem Glutaraldehyd zusammenwirkt bzw. zusammenwirken und deshalb beim gleichzeitigen Einsatz in geringeren Konzentrationen verwendet werden kann, verglichen mit den nötigen Konzentrationen im Falle der Einzelkomponente. Ferner kann die erfindungsgemäße Biozidzusammensetzung bei Bedarf nur mit Wasser als flüssigem Medium hergestellt werden. Diese Zusammensetzungen sind vorteilhafterweise frei von organischen Lösungsmitteln.

In einer Ausführungsform enthält die erfindungsgemäße Biozidzusammensetzung das Isothiazolin-3-onderivat beziehungsweise die Isothiazolin-3-onderivate ausgewählt aus der Gruppe bestehend aus einem oder mehreren N-Alkyl-1,2-benzisothiazolin-3-on(en) und OIT und den Glutaraldehyd (auch unter der Bezeichnung Glutardialdehyd oder unter der Abkürzung GDA bekannt), üblicherweise in einem Gewichtsverhältnis von (1 bis 100):(1 bis 400), vorzugsweise in einem Gewichtsverhältnis von (1 bis 10) : (5 bis 150), insbesondere in einem Gewichtsverhältnis von 1 : (5 bis 50).

Ein Gemisch enthaltend ausschließlich das N-Alkyl-1,2-benzisothiazolin-3-on bzw. die N-Alkyl-1,2-benzisothiazolin-3-one und/oder OIT und Glutaraldehyd in den angegebenen Gewichtsverhältnissen ohne Vorliegen einer weiteren Komponente wird nachstehend als "erfindungsgemäßes Biozidgemisch" bezeichnet werden. Im Rahmen der Offenbarung der Erfindung ist der Begriff "N-Alkyl-1,2-benzisothiazolin-3-on" sowohl als ein einziges N-Alkyl-1,2-benzisothiazolin-3-onderivat als auch als eine Mischung von mehreren N-Alkyl-1,2-benzisothiazolin-3-onderivaten zu verstehen. Eine "erfindungsgemäße Biozidzusammensetzung" kann neben dem N-Alkyl-1,2-benzisothiazolin-3-on und/oder OIT und Glutaraldehyd in den angegebenen Gewichtsverhältnissen ein oder mehrere weitere Bestandteile aufweisen. Der oder die weiteren Bestandteile können dabei eine mikrobizide Wirkung aufweisen, oder sie können keine mikrobizide Wirkung aufweisen, also etwa ein Lösungsmittel, Dispergiermittel oder Suspensionsmittel sein.

Es ist vorteilhaft, wenn die erfindungsgemäße Biozidzusammensetzung das eine oder die mehreren N-Alkyl-1,2-benzisothiazolin-3-on(e) und/oder OIT und Glutaraldehyd in einer Gesamtkonzentration von 5 bis 50 Gew.-%, bevorzugt 10 bis 30 Gew.-%, besonders bevorzugt von 22 bis 28 Gew.-%, jeweils bezogen auf die gesamte Biozidzusammensetzung, enthält.

Der jeweilige Anteil der Isothiazolin-3-on Derivate untereinander kann vom Fachmann je nach Anwendung der erfindungsgemäßen Biozidzusammensetzung über weite Bereiche hinweg variiert werden. So kann eine Biozidzusammensetzung gemäß einer Ausführungsform der Erfindung nur ein Isothiazolin-3-onderivat umfassen. Gemäß einer weiteren Ausführungsform der Erfindung kann die erfindungsgemäße Zusammensetzung jedoch auch zwei oder drei der Isothiazolin-3-onderivate umfassen. Umfasst die erfindungsgemäße Zusammensetzung zwei oder drei der Isothiazolinonderivate, so kann der entsprechende Anteil an N-Alkyl-1,2-benzisothiazolin-3-on und/oder OIT vom Fachmann ohne erfinderisches Zutun festgelegt werden. Gemäß einer Ausführungsform der Erfindung kann die resultierende Zusammensetzung hierdurch einen verbesserten Synergismus aufweisen, das heißt, dass gegenüber einer erfindungsgemäßen Zusammensetzung mit lediglich einem Isothiazolin-3-onderivat geringere Mengen an mikrobioziden Wirkkomponenten eingesetzt werden können.

In einer weiteren Ausführungsform besteht die erfindungsgemäße Biozidzusammensetzung überwiegend aus einem oder mehreren N-Alkyl-1,2-benzisothiazolin-3-on(en) und/oder OIT und Glutaraldehyd in den oben angegebenen Mischungsverhältnissen (also dem erfindungsgemäßen Biozidgemisch). Dies bedeutet, dass die erfindungsgemäße Biozidzusammensetzung als Hauptbestandteil das erfindungsgemäße Biozidgemisch, vorzugsweise in einer Menge von gleich oder größer 50 Gew.-% Gemisch, mehr bevorzugt in einer Menge von gleich oder größer 70 Gew.-%, insbesondere in einer Menge von gleich oder größer 90 Gew.-%, insbesondere in einer Menge von gleich oder größer 95 Gew.-% Gemisch, bezogen auf die Gesamtmasse an biozidem Wirkstoff, enthält. Daneben kann mindestens ein weiteres Biozid vorhanden sein, ebenso wie ein oder mehrere Lösungsmittel, Dispergiermittel oder Suspensionsmittel.

In einer weiteren Ausführungsform der Erfindung besteht die erfindungsgemäße Biozidzusammensetzung im Wesentlichen aus dem erfindungsgemäßen Biozidgemisch, d.h., dass neben dem Gemisch wohl noch ein oder auch mehrere andere Biozide enthalten sein können, diese aber in einer solchen Menge vorliegen, in der kein Beitrag des jeweiligen von den Komponenten des Gemischs verschiedenen Biozids zum Gesamteffekt der entstehenden Mischung vorliegt. Wenn also die biozide Wirkung einer erfindungsgemäßen Biozidzusammensetzung, die - neben den Komponenten des erfindungsgemäßen Biozidgemischs als wesentlichen Bestandteil - noch ein oder mehrere weitere Biozide in untergeordneter bzw. geringfügiger Konzentration aufweist, nicht verändert ist gegenüber dem Einsatz des erfindungsgemäßen Biozidgemischs, wird dieses im Zusammenhang mit der vorliegenden Erfindung als "im Wesentlichen bestehend" bezeichnet. Es können ein oder mehrere weitere Bestandteile ohne eine biozide Wirkung vorhanden sein, etwa Lösungsmittel.

In einer weiteren Ausführungsform kann die erfindungsgemäße Biozidzusammensetzung aus den Komponenten des erfindungsgemäßen Biozidgemischs als einzige biozide Wirkstoffe bestehen, also einem Wirkstoffgehalt von 100% N-Alkyl-1,2-benzisothiazolin-3-on und/oder OIT und Glutaraldehyd in den angegebenen Gewichtsverhältnissen. In einem solchen Fall ist es lediglich möglich, dass ein oder mehrere weitere Bestandteile ohne eine biozide Wirkung vorhanden sind, etwa Lösungsmittel.

In einer weiteren bevorzugten Ausführungsform ist die erfindungsgemäße Biozidzusammensetzung frei von BIT (1,2-Benzisothiazolin-3-on). Dies bedeutet, dass BIT in einer Menge von kleiner oder gleich 5 Gew.-%, vorzugsweise kleiner 2 Gew.-%, insbesondere kleiner 0,1 Gew.-% vorhanden ist. Es ist auch möglich, dass kein BIT enthalten ist (also dies mit den üblichen Analysemethoden nicht nachgewiesen werden kann).

In einer weiteren bevorzugten Ausführungsform ist die erfindungsgemäße Biozidzusammensetzung frei von DCOIT (4,5-Dichlor-2-octyl-4-isothiazolin-3-on). Dies bedeutet, dass DCOIT in einer Menge von kleiner oder gleich 5 Gew.-%, vorzugsweise kleiner 2 Gew.-%, insbesondere kleiner 0,1 Gew.-% vorhanden ist. Es ist auch möglich, dass kein DCOIT enthalten ist (also dies mit den üblichen Analysemethoden nicht nachgewiesen werden kann).

In einer weiteren bevorzugten Ausführungsform ist die erfindungsgemäße Biozidzusammensetzung frei von MIT (2-Methylisothiazolin-3-on). Dies bedeutet, dass MIT in einer Menge von kleiner oder gleich 5 Gew.-%, vorzugsweise kleiner 2 Gew.-%, insbesondere kleiner 0,1 Gew.-% vorhanden ist. Es ist auch möglich, dass kein MIT enthalten ist (also dies mit den üblichen Analysemethoden nicht nachgewiesen werden kann).

In einer weiteren bevorzugten Ausführungsform ist die erfindungsgemäße Biozidzusammensetzung von frei 5-Chlor-2-methylisothiazolin-3-on. Dies bedeutet, dass 5-Chlor-2-methylisothiazolin-3-on in einer Menge von kleiner oder gleich 5 Gew.-%, vorzugsweise kleiner 2 Gew.-%, insbesondere kleiner 0,1 Gew.-% vorhanden ist. Es ist auch möglich, dass kein 5-Chlor-2-methylisothiazolin-3-on enthalten ist (also dies mit den üblichen Analysemethoden nicht nachgewiesen werden kann).

In einer weiteren bevorzugten Ausführungsform ist die erfindungsgemäße Biozidzusammensetzung frei von IPBC (3-Iod-2-propinylbutylcarbamat). Dies bedeutet, dass IPBC in einer Menge von kleiner oder gleich 5 Gew.-%, vorzugsweise kleiner 2 Gew.-%, insbesondere kleiner 0,1 Gew.-% vorhanden ist. Es ist auch möglich, dass kein IPBC enthalten ist (also dies mit den üblichen Analysemethoden nicht nachgewiesen werden kann).

In einer weiteren bevorzugten Ausführungsform ist die erfindungsgemäße Biozidzusammensetzung frei von Pyrithion und/oder Salzen des Pyrithions. Dies bedeutet, dass Pyrithion und/oder Salze des Pyrithions in einer Menge von kleiner oder gleich 5 Gew.-%, vorzugsweise kleiner 2 Gew.-%, insbesondere kleiner 0,1 Gew.-% vorhanden sind. Es ist auch möglich, dass kein Pyrithion und/oder Salze des Pyrithions enthalten sind (also dies mit den üblichen Analysemethoden nicht nachgewiesen werden kann).

In einer weiteren bevorzugten Ausführungsform ist die erfindungsgemäße Biozidzusammensetzung frei von Formaldehyd und/oder Formaldehydspendern. Dies bedeutet, dass Formaldehyd und/oder Formaldehydspender in einer Menge von kleiner oder gleich 5 Gew.-%, vorzugsweise kleiner 2 Gew.-%, insbesondere kleiner 0,1 Gew.-% vorhanden ist. Es ist auch möglich, dass kein Formaldehyd und/oder keine Formaldehydspender enthalten sind (also dies mit den üblichen Analysemethoden nicht nachgewiesen werden kann).

In einer vorteilhaften Ausführungsform liegt die Biozidzusammensetzung in Form einer flüssigen Zubereitung vor, beispielsweise als Lösung, Suspension oder Dispersion in einem flüssigen Medium. Selbstverständlich kann die erfindungsgemäße Biozidzusammensetzung jedoch auch direkt in dem zu konservierenden Produkt gemischt werden.

Es ist zweckmäßig, wenn die erfindungsgemäße Biozidzusammensetzung für die Anwendung in Kombination mit einem polaren oder unpolaren flüssigen Medium vorliegt.

Bevorzugte polare flüssige Medien sind Wasser, aliphatische Alkohole mit 1 bis 4 Kohlenstoffatomen, z. B. Ethanol und Isopropanol, ein Glykol, z. B. Ethylenglykol, Diethylenglykol, 1,2-Propylenglykol, Dipropylenglykol und Tripropylenglykol, ein Glykolether, z. B. Butylglykol und Butyldiglykol, ein Glykolester, z. B. Butyldiglykolacetat oder 2,2,4-Trimethylpenthandiolmonoisobutyrat, ein Polyethylenglykol, ein Propylenglykol, N,N-Dimethylformamid oder ein Gemisch aus zwei oder mehr solcher Medien. Das polare flüssige Medium ist insbesondere Wasser und/oder Glykol.

Als unpolare flüssige Medien können z. B. Aromaten, vorzugsweise Xylol und Toluol dienen, auch diese können alleine oder als Gemische aus zwei oder mehr solcher Medien eingesetzt werden.

Die erfindungsgemäße Biozidzusammensetzung kann auch gleichzeitig mit einem polaren und einem unpolaren flüssigen Medium kombiniert werden.

Die erfindungsgemäße Biozidzusammensetzung ist in ihrem pH-Wert vorzugsweise schwach sauer und weist einen pH-Wert auf, der auf einen Wert von 3 bis 6 eingestellt ist.

Ferner ist es möglich, die erfindungsgemäße Biozidzusammensetzung durch den Zusatz weiterer Wirkstoffe speziellen Anwendungsgebieten anzupassen, beispielsweise im Sinne einer erhöhten Wirkung oder einer verbesserten Verträglichkeit mit den vor den Mikroorganismen zu schützenden Stoffen. Diese weiteren Stoffe sind dem Fachmann auf dem Gebiet der Biozide bekannt und können von diesem in Abhängigkeit der Anwendung der erfindungsgemäßen Biozidzusammensetzung ausgewählt werden.

Spezielle Beispiele für solch weitere biozide Wirkstoffe sind nachfolgend angegeben:

Benzylalkohol; 2,4-Dichlorbenzylalkohol; 2-Phenoxyethanol; Phenylethylalkohol; 5-Brom-5-nitro-1,3-dioxan; Bronopol; Sorbinsäure; Benzoesäure; Salicylsäure; p-Hydroxybenzoesäureester; Chloracetamid; Phenole, wie p-Chlor-m-kresol und o-Phenylphenol; quartäre Ammoniumverbindungen, wie N-Alkyl-N,N-dimethylbenzylammoniumchlorid und Di-n-decyldimethylammoniumchlorid; Cetylpyridiniumchlorid; Diguanidin; Polybiguanid; Chlorhexidin; 1,2-Dibrom-2,4-dicyanobutan; 3,5-Dichlor-4-hydroxybenzaldehyd; Tetra-(hydroxymethyl)-phosphoniumsalze; Dichlorophen; 2,2-Dibrom-3-nitrilo-propionsäureamid; 3-Iod-2-propinyl-N-butylcarbamat; Methyl-N-benzimidazol-2-ylcarba-mat; 2,2'-Dithio-dibenzoesäure-di-N-methylamid; 2-Thiocyanomethylthiobenzthiazol; Methylenbisthiocyanat; Chlorothalonin; Propioconazol; Tebuconazol; TCMTB; Terbutryn, Cyfluthrin, Isoproturon, Triclosan, Diuron und Irgarol.

Die erfindungsgemäße Biozidzusammensetzung kann daneben noch andere übliche Bestandteile enthalten, die dem Fachmann auf dem Gebiet der Biozide als Zusatzstoffe bekannt sind. Es sind dies z. B. Verdickungsmittel, Entschäumer, Stoffe zur Einstellung und Pufferung des pH-Werts, Duftstoffe, Dispergierhilfsmittel und färbende oder verfärbungsvermeidende Stoffe, Komplexierungsagenzien und Stabilisatoren.

Die als mikrobiozide Wirkkomponente eingesetzten Isothiazolin-3-one sind bekannte Stoffe und sind als solche im Handel erhältlich oder nach bekannten Methoden herzustellen.

Die erfindungsgemäße Biozidzusammensetzung kann zur Konservierung auf sehr unterschiedlichen Gebieten eingesetzt werden. Sie eignet sich beispielsweise für den Einsatz als Mittel zur Konservierung von Ligninsulfonaten und Stärkepräparationen, sowie für den Einsatz in Anstrichmitteln, wie z. B. Farben, Lacken, Lasuren und Putzen, in Emulsionen, Latices, Polymerdispersionen, Kreideaufschlämmungen, mineralischen Slurrys, keramischen Massen, Klebstoffen, Duftstoffen, kaseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithographischen Flüssigkeiten, Verdickern, kosmetischen Produkten, Toilettenartikeln, Wasserkreisläufen, Flüssigkeiten bei der Papierverarbeitung, Flüssigkeiten bei der Holzverarbeitung, Flüssigkeiten bei der Erdölgewinnung, Flüssigkeiten bei der Lederherstellung, Flüssigkeiten bei der Textilherstellung, Bohr- und Schneidölen, hydraulischen Flüssigkeiten und Kühlschmierstoffen gegen den Befall durch beispielsweise Bakterien, filamentöse Pilze, Hefen und Algen.

Vorzugsweise wird die erfindungsgemäße Biozidzusammensetzung gegen den Befall von Mikroorganismen in Ligninsulfonaten und Stärkepräparationen sowie in Anstrichmitteln, wie z. B. Farben, Lacken, Lasuren und Putzen, in Emulsionen, Latices, Polymerdispersionen, Klebstoffen, Reinigungsmitteln, mineralischen Slurrys, keramischen Massen, Pigmentpasten und Pigmentdispersionen sowie Dichtstoffen eingesetzt. Besonders bevorzugte Einsatzgebiete sind die Konservierung von Ligninsulfonaten, Stärkepräparationen, sowie die Konservierung von Wasserkreisläufen, Flüssigkeiten bei der Papierverarbeitung, Flüssigkeiten bei der Holzverarbeitung, Flüssigkeiten bei der Erdölgewinnung, Flüssigkeiten bei der Lederherstellung, Flüssigkeiten bei der Textilherstellung, Bohr- und Schneidölen, hydraulischen Flüssigkeiten und Kühlschmierstoffen.

Bei der praktischen Anwendung kann die Biozidzusammensetzung entweder als fertiges Gemisch oder durch getrennte Zugabe der mikrobioziden Wirkkomponenten der Zusammensetzung in den zu konservierenden Stoff eingebracht werden.

In dem mit der erfindungsgemäßen Biozidzusammensetzung gegen den Befall durch Mikroorganismen zu konservierendem Stoff ist das zumindest eine Isothiazolin-3-onderivat vorzugsweise in einer Menge von 5 bis 200 ppm, bevorzugt in einer Menge von 10 bis 100 ppm, insbesondere bevorzugt in einer Menge von 25 bis 75 ppm enthalten. Die Menge des Glutaraldehyds in dem zu konservierenden Stoff beträgt vorzugsweise 1 bis 5000 ppm, bevorzugt 50 bis 2500 ppm, besonders bevorzugt 100 bis 1500 ppm.

Gemäß einer Ausfuhrungsform der Erfindung liegt die erfindungsgemäße Biozidzusammensetzung als Konzentrat vor, welches den zu konservierenden Stoffen zugegeben wird. Das Konzentrat weist vorteilhafterweise das oder die N-Alkyl-1,2-benzisothiazolin-3-on(e) und/oder das OIT in einer Menge von 0,1 bis 10 Gew.-%, bevorzugt in einer Menge von 0,5 bis 5 Gew.-%, besonders bevorzugt in einer Menge von 1 bis 3 Gew.-%, bezogen auf die Gesamtmasse des Konzentrats auf. Die Menge an Glutaraldehyd in dem Konzentrat beträgt vorzugsweise 5 bis 50 Gew.-%, bevorzugt 10 bis 30 Gew.-%, besonders bevorzugt 15 bis 25 Gew.-%, bezogen auf die Gesamtmasse des Konzentrats.

Die erfindungsgemäße Biozidzusammensetzung kann hergestellt werden, indem die Bestandteile unter Rühren in jeder Reihenfolge bei einer Temperatur von 25+/- 20°C gemischt werden.

Gemäß einer bevorzugten Ausführungsform der Erfindung sind das bzw. sind die N-Alkyl-1,2-benzisothiazolin-3-on(e) und/oder das OIT und die gegebenenfalls weiteren bioziden Wirkstoffe der erfindungsgemäßen Biozidzusammensetzung im Innern von sogenannten Mikrokapseln eingeschlossen. Mikrokapseln, in deren Innern Biozide eingeschlossen sind, werden in der WO 2004/000953 der Anmelderin beschrieben. Bevorzugte Materialien für die Mikrokapselwand sind Melamin-Formaldehyd-Harze.

Ein unerwarteter Vorteil, der in Verbindung mit der Erfindung der vorstehend offenbarten Biozidzusammensetzung erkannt wurde, besteht darin, dass synergistische biozide Aktivität erzielt wird, wenn ein oder mehrere Isothiazolin-3-onderivat(e) ausgewählt aus der Gruppe bestehend aus einem oder mehreren N-Alkyl-1,2-benzisothiazolin-3-on(en) und 2-n-Octylisothiazolin-3-on zusammen mit Glutaraldehyd verwendet wird beziehungsweise werden.

Die folgenden Beispiele dienen zur weiteren Veranschaulichung der vorliegenden Erfindung.

BEISPIEL 1

**Untersuchung der synergistischen Wirkung**

Es wurde der Synergismus einer Kombination von Glutaraldehyd mit 2-n-Octyl-isothiazolin-3-on (OIT) getestet. Als Testorganismus wurde das grampositive Bakterium *Staphylococcus aureus* (ATCC 6538) verwendet. Dazu wurden wässrige Gemische mit unterschiedlichen Konzentrationen an Glutaraldehyd und OIT hergestellt sowie bezüglich ihrer Wirkung auf *Staphylococcus aureus* überprüft. Die wässrigen Gemische enthielten außerdem noch eine Müller-Hinton-Bouillon (Handelsprodukt "Merck Nr. 10393") als Nährmedium. Die Zelldichte des *Staphylococcus aureus* lag bei $10^6$ Keimen pro ml.

Die Inkubationszeit betrug 72 Stunden bei 25 °C. Jede Probe wurde mit 120 U/min auf einem Inkubationsschüttler gebrütet. Nach 72 Stunden wurde visuell auf ein Wachstum von *Staphylococcus aureus* geprüft. Das Wachstum zeigte sich durch eine Trübung des Nährmediums. Auf diese Weise wurden die minimalen Hemmkonzentrationen (MHK) der beiden Wirkstoffe einzeln und in Kombination bestimmt. Die MHK ist diejenige Konzentration, bei der gerade keine Trübung des Nährmediums mehr eintritt.

Der auftretende Synergismus wurde durch Berechnen des Synergieindex (SI) zahlenmäßig dargestellt. Die Berechnung erfolgte nach der gängigen Methode von F.C. Kull et al., Applied Microbiology, Bd. 9 (1961), S. 538. Dort wird der SI nach der folgenden Formel berechnet:

$$\text{Synergieindex SI} = Q_a/Q_A + Q_b/Q_B$$

Bei der Anwendung dieser Formel auf das hier geprüfte Biozidsystem OIT + Glutaraldehyd haben die Größen in der Formel folgende Bedeutung:

$Q_a$ = Konzentration von Glutaraldehyd in der Mischung OIT + Glutaraldehyd
$Q_A$ = Konzentration von Glutaraldehyd als alleinigem Biozid
$Q_b$ = Konzentration von OIT im Biozidgemisch
$Q_B$ = Konzentration von OIT als alleinigem Biozid

Wenn der Synergieindex einen Wert von über 1 aufweist, bedeutet dies, dass ein Antagonismus vorliegt.

Wenn der Synergieindex den Wert 1 annimmt, bedeutet dies, dass eine Addition der Wirkung der beiden Biozide gegeben ist. Wenn der Synergieindex einen Wert von unter 1 annimmt, bedeutet dies, dass ein Synergismus der beiden Biozide besteht.

Tabelle 1

| Berechnung des Synergieindexes von OIT + Glutaraldehyd bezüglich *Staphylococcus aureus* bei einer Inkubationszeit von 72 Stunden bei 25 °C. | | | | | | | |
|---|---|---|---|---|---|---|---|
| MHK bei $Q_a$ GDA-Konzentration [ppm] | MHK bei $Q_b$ OIT-Konzentration [ppm] | Gesamtkonzentration GDA+OIT $Q_a + Q_b$ [ppm] | Konzentration GDA (Gew.-%) | OIT | $Q_a/Q_A$ | $Q_b/Q_B$ | Synergieindex |
| 0 | 30 | 30 | 0,0 | 100,0 | 0,00 | 1,00 | 1,00 |
| 30 | 20 | 50 | 60,0 | 40,0 | 0,20 | 0,67 | 0,87 |
| 40 | 10 | 50 | 80,0 | 20,0 | 0,27 | 0,33 | 0,60 |
| 100 | 5 | 105 | 95,2 | 4,8 | 0,67 | 0,17 | 0,83 |
| 150 | 0 | 150 | 100,0 | 0,0 | 1,00 | 0,00 | 1,00 |
| $Q_a$ = Glutaraldehydkonzentration (Gemisch aus OIT und Glutaraldehyd), die einen Endpunkt zeigt<br>$Q_A$ = Glutaraldehydkonzentration (Glutaraldehyd allein), die einen Endpunkt zeigt<br>$Q_b$ = OIT-Konzentration (Zusammensetzung OIT + Glutaraldehyd), die einen Endpunkt zeigt<br>$Q_B$ = OIT-Konzentration (OIT allein), die einen Endpunkt zeigt | | | | | | | |

Aus der Tabelle 1 ist ersichtlich, dass der optimale Synergismus, d.h. der niedrigste Synergieindex (0,60) einer Biozidzusammensetzung aus OIT und Glutaraldehyd bei einem Verhältnis von 20 Gew.-% OIT zu 80 Gew.-% Glutaraldehyd liegt.

BEISPIEL 2

**Untersuchung der synergistischen Wirkung**

Das Experiment aus Beispiel 1 wurde analog wiederholt, jedoch mit dem Organismus *Candida albicans* (ATCC 10231) an Stelle von *Staphylococcats aureus*. Tabelle 2 zeigt die gefundenen minimalen Hemmkonzentrationen und die berechneten Synergieindices des geprüften Systems.

Tabelle 2

| Berechnung des Synergieindex von OIT und Glutaraldehyd bezüglich *Candida albicans* bei einer Inkubationszeit von 72 Stunden bei 25 °C: | | | | | | | |
|---|---|---|---|---|---|---|---|
| MHK bei $Q_a$ GDA-Konzentration [ppm] | MHK bei $Q_b$ OIT-Konzentration [ppm] | Gesamtkonzentration GDA+OIT $Q_a + Q_b$ [ppm] | Konzentration GDA (Gew.-%) | OIT | $Q_a/Q_A$ | $Q_b/Q_B$ | Synergieindex |
| 0 | 7,5 | 7,5 | 0,0 | 100,0 | 0,00 | 1,00 | 1,00 |
| 125 | 5 | 130 | 96,2 | 3,8 | 0,25 | 0,67 | 0,92 |
| 250 | 1 | 251 | 99,6 | 0,4 | 0,50 | 0,13 | 0,63 |
| 500 | 0 | 500 | 100,0 | 0,0 | 1,00 | 0,00 | 1,00 |

$Q_a$ = Glutaraldehydkonzentration (Gemisch aus OIT und Glutaraldehyd), die einen Endpunkt zeigt
$Q_A$ = Glutaraldehydkonzentration (Glutaraldehyd allein), die einen Endpunkt zeigt
$Q_b$ = OIT-Konzentration (Zusammensetzung OIT + Glutaraldehyd), die einen Endpunkt zeigt
$Q_B$ = OIT-Konzentration (OIT allein), die einen Endpunkt zeigt

Aus Tabelle 2 ist ersichtlich, dass der optimale Synergismus, d.h. der niedrigste Synergieindex (0,63) einer Biozidzusammensetzung aus OIT und Glutaraldehyd bei einem Verhältnis von 99,6 Gew.-% Glutaraldehyd zu 0,4 Gew.-% OIT liegt.

BEISPIEL 3

Zur näheren Untersuchung der Wirksamkeit der erfindungsgemäßen Biozidzusammensetzung wurde deren Wirksamkeit gegenüber Bakterien und Hefen in einer weiteren Versuchsreihe geprüft. Hierzu wurden die jeweiligen Organismen in physiologischer Kochsalzlösung resuspendiert und den Proben in einem Volumenverhältnis von 1:100 hinzugegeben, so dass die Proben insgesamt $10^7$ Bakterienzellen bzw. $10^6$ Hefezellen enthielten. Das Probenvolumen betrug jeweils 50 ml, hinzu wurden 0.5 ml Bakterien- bzw. Hefesuspension gegeben. Nach sechstägiger Inkubation bei 30°C (Bakterien) respektive 25°C (Hefen) im Inkubator wurde mittels Plattenaufstrichverfahren die Überlebendzellzahl bestimmt. Der Test wurde in einer repetitiven Belastung jeweils 4-mal wiederholt. Die Auswerteskala befindet sich in Tabelle 3, die Ergebnisse der Wirksamkeitsuntersuchungen sind in den Tabellen 4 und 5 dargestellt.

Tabelle 3

| Auswerteskala für Bakterien und Hefen | |
|---|---|
| **Wachstumsrate** | **Wachstum auf der Agraroberfläche** |
| 0 | Kein Bewuchs |
| 1 | Minimaler Bewuchs; ca. 1 bis 10 Kolonien auf gesamtem Ausstrich zu sehen |
| 2 | Leichter Bewuchs, max. 100 Kolonien |
| 3 | Mäßiger Bewuchs, max. 300 bis 400 Kolonien |
| 4 | Gleichmäßiger Bewuchs, Einzelkolonien noch gut zu erkennen, > 400 Kolonien |
| 5 | Starker Bewuchs, zu viele Kolonien zum Auszählen, aber nicht gesamte Oberfläche bewachsen |
| 6 | Flächiger Bewuchs, kaum noch Einzelkolonien zu erkennen, gesamter Ausstrich bewachsen |

Tabelle 4

| Ergebnisse der Wirksamkeitsuntersuchungen an einer Bakterienmischung umfassend die Organismen *Aeromonas hydrophila, Alcaligenes faecalis, Cellulomonas flavigena, Corynebacterium ammoniagenes, Enterobacter aerogenes, Eseherichia coli, Klebsiella pneumonia, Proteus vulgaris, Providencia rettgeri, Pseudomonas aeruginosa, Pseudomonas stutzeri, Serratia liquefaciens* in dem Substrat Calcium-Ligninsulfonat. | | | | |
|---|---|---|---|---|
| | **Bakterieller Bewuchs nach Beimpfung** | | | |
| Probenbezeichnung | 1. | 2. | 3. | 4. |
| Blank ohne Biozid | 4 | 4 | 2 | 2 |
| + 1000 ppm Glyoxal | 0 | 0 | 0 | 0 |
| + 960 ppm Glutaraldehyd | 0 | 0 | 0 | 0 |
| + 50 ppm OIT | 0 | 0 | 0 | 0 |
| + 45 ppm OIT + 1200 ppm HCHO gesamt | 0 | 0 | 0 | 0 |
| + 75 ppm OIT + 600 ppm HCHO gesamt | 0 | 0 | 0 | 0 |
| + 50 ppm OIT + 960 ppm Glutaraldehyd | 0 | 0 | 0 | 0 |
| + 50 ppm OIT + 1000 ppm Glyoxal | 0 | 1 | 0 | 0 |

Aus Tabelle 4 ist die Wirksamkeit der erfindungsgemäßen Biozidzusammensetzung gegen die Bakterienmischung deutlich ersichtlich. Die Verwendung des Glutaraldehyds in Kombination mit OIT anstelle der bekannten Kombinationen von Formaldehyd mit OIT oder Glyoxal mit OIT zeigt ebenfalls eine starke Wirkung gegen den bakteriellen Befall von Gebinden. Somit stellt die vorliegende Erfindung eine sehr wirksame, formaldehydfreie mikrobiozide Zusammensetzung zur Verfügung, welche sich als industrielle Konservierungsmittel zum Schutz von wasserhaltigen technischen Produkten hervorragend eignet.

Tabelle 5

| Ergebnisse der Wirksamkeitsuntersuchungen an einer Mischung enthaltend die Hefen *Candida rubra, Rhodotoruba rubra und Saccharomyces cervisiae* in dem Substrat Calcium-Ligninsulfonat. | | | | |
|---|---|---|---|---|
| | **Hefe - Bewuchs nach Beimpfung** | | | |
| Probenbezeichnung | 1. | 2. | 3. | 4. |
| Blank ohne Biozid | 4 | 6 | 6 | 6 |
| + 1000 ppm Glyoxal | 5 | 6 | 6 | 6 |
| + 960 ppm Glutaraldehyd | 4 | 6 | 6 | 6 |
| + 50 ppm OIT | 0 | 1 | 3 | 4 |
| + 45 ppm OIT + 1200 ppm HCHO gesamt | 0 | 0 | 0 | 0 |
| + 75 ppm OIT + 600 ppm HCHO gesamt | 0 | 0 | 0 | 0 |
| + 50 ppm OIT + 960 ppm Glutaraldehyd | 0 | 0 | 0 | 0 |
| + 50 ppm OIT + 1000 ppm Glyoxal | 5 | 6/6 | 6 | 6 |

Aus Tabelle 5 ist die Wirksamkeit der erfindungsgemäßen Biozidzusammensetzung gegen die vorstehend angegebenen Hefen deutlich ersichtlich. Die Verwendung des Glutaraldehyds in Kombination mit OIT anstelle der bekannten Kombinationen von Formaldehyd mit OIT oder Glyoxal mit OIT zeigt ebenfalls eine starke Wirkung gegen den bakteriellen Befall von Gebinden. Somit stellt die vorliegende Erfindung eine sehr wirksame, formaldehydfreie mikrobiozide Zusammensetzung zur Verfügung, welche sich als industrielle Konservierungsmittel zum Schutz von wasserhaltigen technischen Produkten hervorragend eignet.

BEISPIEL 4

**Untersuchung der synergistischen Wirkung von Glutaraldehyd mit N-Methyl-1,2-benzisothiazolin-3-on (M-BIT)**

Es wurde der Synergismus einer Kombination von Glutaraldehyd mit N-Methyl-1,2-benzisothiazolin-3-on, nachfolgend auch als M-BIT bezeichnet, getestet. Als Testorganismus wurde das grampositive Bakterium *Staphylococcus aureus* (ATCC 6538) verwendet. Dazu wurden wässrige Gemische mit unterschiedlichen Konzentrationen an Glutaraldehyd und N-Methyl-1,2-benzisothiazolin-3-on hergestellt sowie bezüglich ihrer Wirkung auf *Staphylococcus aureus* überprüft. Die wässrigen Gemische enthielten außerdem noch eine Müller-Hinton-Bouillon (Handelsprodukt "Merck Nr. 10393") als Nährmedium. Die Zelldichte des *Staphylococcus aureus* lag bei $10^6$ Keimen pro ml.

Die Inkubationszeit betrug 72 Stunden bei 25 °C. Jede Probe wurde mit 120 U/min auf einem Inkubationsschüttler gebrütet. Nach 72 Stunden wurde visuell auf ein Wachstum von *Staphylococcus aureus* geprüft. Das Wachstum zeigte sich durch eine Trübung des Nährmediums. Auf diese Weise wurden die minimalen Hemmkonzentrationen (MHK) der beiden Wirkstoffe einzeln und in Kombination bestimmt. Die MHK ist diejenige Konzentration, bei der gerade keine Trübung des Nährmediums mehr eintritt.

Der auftretende Synergismus wurde durch Berechnen des Synergieindex (SI) zahlenmäßig dargestellt. Die Berechnung erfolgte nach der gängigen Methode von F.C. Kull et al., Applied Microbiology, Bd. 9 (1961), S. 538. Dort wird der SI nach der folgenden Formel berechnet:

$$\text{Synergieindex SI} = Q_a/Q_A + Q_b/Q_B$$

Bei der Anwendung dieser Formel auf das hier geprüfte Biozidsystem N-Methyl-1,2-benzisothiazolin-3-on + Glutaraldehyd haben die Größen in der Formel folgende Bedeutung:

$Q_a$ =  Konzentration von Glutaraldehyd in der Mischung N-Methyl-1,2-benzisothiazolin-3-on + Glutaraldehyd
$Q_A$ =  Konzentration von Glutaraldehyd als alleinigem Biozid
$Q_b$ =  Konzentration von N-Methyl-1,2-benzisothiazolin-3-on im Biozidgemisch
$Q_B$ =  Konzentration von N-Methyl-1,2-benzisothiazolin-3-on als alleinigem Biozid

Wenn der Synergieindex einen Wert von über 1 aufweist, bedeutet dies, dass ein Antagonismus vorliegt.

Wenn der Synergieindex den Wert 1 annimmt, bedeutet dies, dass eine Addition der Wirkung der beiden Biozide gegeben ist. Wenn der Synergieindex einen Wert von unter 1 annimmt, bedeutet dies, dass ein Synergismus der beiden Biozide besteht.

Tabelle 6

| Berechnung des Synergieindexes von N-Methyl-1,2-benzisothiazolin-3-on (M-BIT)+ Glutaraldehyd bezüglich *Staphylococcus aureus* bei einer Inkubationszeit von 72 Stunden bei 25 °C. | | | | | | | |
|---|---|---|---|---|---|---|---|
| MHK bei $Q_a$ GDA-Konzentration [ppm] | MHK bei $Q_b$ M-BIT-Konzentration [ppm] | Gesamt-konzentration GDA+M-BIT $Q_a + Q_b$ [ppm] | Konzentration GDA (Gew.-%) | M-BIT | $Q_a/Q_A$ | $Q_b/Q_B$ | Synergie-index |
| 0 | 12,5 | 12,5 | 0,0 | 100,0 | 0,00 | 1,00 | 1,00 |
| 20 | 10 | 30 | 66,7 | 33,3 | 0,13 | 0,80 | 0,93 |
| 50 | 5 | 55 | 90,9 | 9,1 | 0,33 | 0,40 | 0,73 |
| 100 | 2,5 | 102,5 | 97,6 | 2,4 | 0,67 | 0,20 | 0,87 |
| 125 | 1 | 126 | 99,2 | 0,8 | 0,83 | 0,08 | 0,91 |
| 150 | 0 | 150 | 100,0 | 0,0 | 1,00 | 0,00 | 1,00 |
| $Q_a$ = Glutaraldehydkonzentration (Gemisch aus M-BIT und Glutaraldehyd, das einen Endpunkt zeigt) $Q_A$ = Glutaraldehydkonzentration (Glutaraldehyd allein, das einen Endpunkt zeigt) $Q_b$ = M-BIT-Konzentration (Gemisch aus M-BIT + Glutaraldehyd, das einen Endpunkt zeigt) $Q_B$ = M-BIT-Konzentration (M-BIT allein, das einen Endpunkt zeigt) | | | | | | | |

Aus der Tabelle 6 ist ersichtlich, dass der optimale Synergismus, d.h. der niedrigste Synergieindex (0,73) einer Biozidzusammensetzung aus N-Methyl-1,2-benzisothiazolin-3-on und Glutaraldehyd bei einem Verhältnis von 9,1 Gew.-% N-Methyl-1,2-benzisothiazolin-3-on zu 90,9 Gew.-% Glutaraldehyd liegt.

BEISPIEL 5

**Untersuchung der synergistischen Wirkung von Glutaraldehyd mit N-n-Butyl-1,2-benzisothiazolin-3-on (B-BIT)**

Das Experiment aus Beispiel 4 wurde analog wiederholt, anstelle des N-Methyl-1,2-benzisothiazolin-3-ons wurde das N-n-Butyl-1,2-benzisothiazolin-3-on, nachfolgend auch als B-BIT bezeichnet, eingesetzt um einen Synergismus zwischen Glutaraldehyd und N-Butyl-1,2-benzisothiazolin-3-on zu untersuchen. Als Testorganismus wurde auch hier das grampositive Bakterium *Staphylococcus aureus* (ATCC 6538) verwendet

Tabelle 7

| Berechnung des Synergieindexes von N-n-Butyl-1,2-benzisothiazolin-3-on (B-BIT)+ Glutaraldehyd bezüglich *Staphylococcus aureus* bei einer Inkubationszeit von 72 Stunden bei 25 °C. | | | | | | | |
|---|---|---|---|---|---|---|---|
| MHK bei $Q_a$ GDA-Konzentration [ppm] | MHK bei $Q_b$ B-BIT-Konzentration [ppm] | Gesamtkonzentration GDA+B-BIT $Q_a + Q_b$ [ppm] | Konzentration GDA (Gew.-%) | B-BIT | $Q_a/Q_A$ | $Q_b/Q_B$ | Synergieindex |
| 0 | 20 | 20 | 0,0 | 100,0 | 0,00 | 1,00 | 1,00 |
| 30 | 15 | 45 | 66,7 | 33,3 | 0,20 | 0,75 | 0,95 |
| 50 | 10 | 60 | 83,3 | 16,7 | 0,33 | 0,50 | 0,83 |
| 75 | 7,5 | 82,5 | 90,9 | 9,1 | 0,50 | 0,38 | 0,88 |
| 100 | 5 | 105 | 95,2 | 4,8 | 0,67 | 0,25 | 0,92 |
| 150 | 0 | 150 | 100,0 | 0,0 | 1,00 | 0,00 | 1,00 |
| $Q_a$ = Glutaraldehydkonzentration (Gemisch aus B-BIT und Glutaraldehyd, das einen Endpunkt zeigt)<br>$Q_A$ = Glutaraldehydkonzentration (Glutaraldehyd allein, das einen Endpunkt zeigt)<br>$Q_b$ = B-BIT-Konzentration (Gemisch aus B-BIT + Glutaraldehyd, das einen Endpunkt zeigt)<br>$Q_B$ = B-BIT-Konzentration (B-BIT allein, das einen Endpunkt zeigt) | | | | | | | |

Aus der Tabelle 7 ist ersichtlich, dass der optimale Synergismus, d.h. der niedrigste Synergieindex (0,83) einer Biozidzusammensetzung aus N-n-Butyl-1,2-benzisothiazolin-3-on und Glutaraldehyd bei einem Verhältnis von 16,7 Gew.-% N-n-Butyl-1,2-benzisothiazolin-3-on zu 83,3 Gew.-% Glutaraldehyd liegt.

BEISPIEL 6

**Untersuchung der synergistischen Wirkung von Glutaraldehyd mit N-n-Butyl-1,2-benzisothiazolin-3-on an dem Organismus *Candida albicans***

Das Experiment aus Beispiel 5 wurde analog wiederholt, jedoch mit dem Organismus *Candida albicans* (ATCC 10231) an Stelle von *Staphylococcus aureus.* Tabelle 8 zeigt die gefundenen minimalen Hemmkonzentrationen und die berechneten Synergieindices des geprüften Systems.

EP 2 157 862 B1

Tabelle 8

| Berechnung des Synergieindex von N-n-Butyl-1,2-benzisothiazolin-3-on und Glutaraldehyd bezüglich *Candida albicans* bei einer Inkubationszeit von 72 Stunden bei 25 °C: | | | | | | | |
|---|---|---|---|---|---|---|---|
| MHK bei $Q_a$ GDA-Konzentration [ppm] | MHK bei $Q_b$ B-BIT-Konzentration [ppm] | Gesamtkonzentration GDA + B-BIT $Q_a + Q_b$ [ppm] | Konzentration GDA B-BIT (Gew.-%) | | $Q_a/Q_A$ | $Q_b/Q_B$ | Synergieindex |
| 1300 | 0 | 1300 | 100,0 | 0,0 | 1,00 | 0,00 | 1,00 |
| 1000 | 5 | 1005 | 99,5 | 0,5 | 0,77 | 0,10 | 0,87 |
| 750 | 15 | 765 | 98,0 | 2,0 | 0,58 | 0,30 | 0,88 |
| 300 | 30 | 330 | 90,9 | 9,1 | 0,23 | 0,60 | 0,83 |
| 0 | 50 | 50 | 0,0 | 100,0 | 0,00 | 1,00 | 1,00 |
| $Q_a$ = Glutaraldehydkonzentration (Gemisch aus B-BIT und Glutaraldehyd, das einen Endpunkt zeigt) $Q_A$ = Glutaraldehydkonzentration (Glutaraldehyd allein, das einen Endpunkt zeigt) $Q_b$ = B-BIT-Konzentration (Gemisch aus B-BIT + Glutaraldehyd, das einen Endpunkt zeigt) $Q_B$ = B-BIT-Konzentration (B-BIT allein, das einen Endpunkt zeigt) | | | | | | | |

Aus Tabelle 8 ist ersichtlich, dass der optimale Synergismus, d.h. der niedrigste Synergieindex (0,83) einer Biozidzusammensetzung aus B-BIT und Glutaraldehyd bei einem Verhältnis von 90,9 Gew.-% Glutaraldehyd zu 9,1 Gew.-% B-BIT liegt.

**Patentansprüche**

1. Biozidzusammensetzung enthaltend Glutaraldehyd und als weitere(n) Bestandteil(e) ein oder mehrere Isothiazolin-3-onderivat(e) ausgewählt aus der Gruppe bestehend aus N-Alkyl-1,2-benzisothiazolin-3-onen und 2-n-Octylisothiazolin-3-on (OIT).

2. Biozidzusammensetzung nach Anspruch 1, wobei das eine oder die mehreren Isothiazolin-3-on-Derivat(e) ausgewählt aus N-Methyl-1,2-benzisothiazolin-3-on, N-n-Butyl-1,2-benzisothiazolin-3-on und 2-n-Octylisothiazolin-3-on ist bzw. sind.

3. Biozidzusammensetzung nach Anspruch 1 oder 2, wobei wenigstens eines der Isothiazolin-3-onderivate in Mikrokapseln eingeschlossen ist.

4. Biozidzusammensetzung nach Anspruch 3, wobei die Mikrokapsel ein AminoplastHarz als Kapselmaterial umfasst.

5. Biozidzusammensetzung nach einem der Ansprüche 1 bis 4, **dadurch gekennzeichnet, dass** das eine oder die mehreren Isothoazolin-3-ondrivat(e) und der Glutaraldehyd im Gewichtsverhältnis von (1 bis 100) : (1 bis 400) vorliegen.

6. Biozidzusammensetzung nach Anspruch 1 oder 2, **dadurch gekennzeichnet, dass** diese den Glutaraldehyd und das Isothiazolin-3-onderivat bzw. die Isothiazolin-3-onderivate in einer Gesamtkonzentration von 5 bis 50 Gew.-% bezogen auf die gesamte Biozidzusammensetzung enthält.

7. Biozidzusammensetzung nach einem der Ansprüche 1 bis 6, **dadurch gekennzeichnet, dass** sie ein polares und/oder unpolares Medium umfasst.

8. Biozidzusammensetzung nach einem der Ansprüche 1 bis 7, **dadurch gekennzeichnet, dass** sie als polares flüssiges Medium Wasser, einen aliphatischen Alkohol mit 1 bis 4 Kohlenstoffatomen, ein Glykol, einen Glykolether, einen Glykolester, ein Polyethylenglykol, ein Polypropylenglykol, N,N-Dimethyl-formamid, 2,2,4-Trimethylpenthandiolmonoisobutyrat, oder ein Gemisch aus solchen umfasst.

9. Biozidzusammensetzung nach einem der Ansprüche 1 bis 8, **dadurch gekennzeichnet, dass** sie als polares Medium Wasser oder Glykol oder ein Gemisch aus diesen umfasst.

10. Biozidzusammensetzung nach einem der Ansprüche 1 bis 9, **dadurch gekennzeichnet, dass** die Zusammensetzung einen pH-Wert von 3 bis 6 aufweist.

11. Biozidzusammensetzung nach einem der Ansprüche 1 bis 10, **dadurch gekennzeichnet, dass** sie als flüssige Zubereitung vorliegt.

12. Verwendung der Biozidzusammensetzung nach einem der Ansprüche 1 bis 11 für die Gebindekonservierung.

13. Verwendung der Biozidzusammensetzung nach Anspruch 12 für die Gebindekonservierung von Ligninsulfonaten, Stärkepräparationen, Anstrichmitteln wie Farben, Lacken und Putzen, von Polymerdispersionen, Emulsionen, Latices, und Klebstoffen.

14. Konserviertes Produkt, enthaltend eine Biozidzusammensetzung wie in einem der Ansprüche 1 bis 11 beschrieben.

15. Konserviertes Produkt nach Anspruch 14, ausgewählt aus Ligninsulfonaten und Stärkepräparationen in Anstrichmitteln, Farben, Lacken, Lasuren und Putzen, Emulsionen, Latices, Polymerdispersionen, Kreideaufschlämmungen, mineralischen Slurrys, keramischen Massen, Klebstoffen, Duftstoffen, kaseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithographischen Flüssigkeiten, Verdickern, kosmetischen Produkten, Toilettenartikeln, Wasserkreisläufen, Flüssigkeiten bei der Holzverarbeitung, Flüssigkeiten bei der Erdölgewinnung, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen.

**Claims**

1. Biocide composition containing glutaraldehyde and as a further component(s) one or more isothiazolin-3-one derivative(s) selected from the group consisting of N-Alkyl-1,2-benzisothiazolin-3-ones and 2-n-Octylisothiazolin-3-one (OIT).

2. Biocide composition according to claim 1, wherein the one or more isothiazolin-3-one derivative is or are selected from N-Methyl-1,2-benzisothiazalin-3-one, N-n-Butyl-1,2-benzisothiazolin-3-one and 2-n-Octylisothiazolin-3-one.

3. Biocide composition according to claim 1 or 2, wherein at least one of the isothiazo lin-3-onderives is enclosed in microcapsules.

4. Biocide composition according to claim 3, wherein the microcapsule comprises an aminoplast resin as capsule material.

5. Biocide composition according to one of claims 1 to 4, **characterized in that** the one or the more isothoazolin-3-onederivative(s) and glutaraldehyde are present in a weight ratio of (1 to 100) : (1 to 400).

6. Biocide composition according to claim 1 or 2, **characterized in that** it comprises the glutaraldehyde and the isothiazolin-3one derivative or the isathiazolin-3-one derivatives in a total concentration of 5 to 50 wt.-% relative to the entire biocide composition.

7. Biocide composition according to one of claims 1 to 6, **characterized in that** it comprises a polar and/or non-polar medium.

8. Biocide composition according to one of claims 1 to 7, **characterized in that** it contains as polar liquid medium water, an aliphatic alcohol having 1 to 4 carbon atoms, a glycol, a glycol ether, a glycol ester, a polyethylene glycol, a polypropylene glycol, N,N-dimethylformamide, 2,2,4-Trimethylpentanediolmonoisobutyrate, or a mixture of these.

9. Biocide composition according to one of claims 1 to 8, **characterized in that** it comprises as the polar medium water or glycol or a mixture of these.

10. Biocide composition according to one of claims 1 to 9, **characterized in that** the composition has a pH value of 3 to 6.

11. Biocide composition according to one of claims 1 to 10, **characterized in that** it is present as a liquid preparation.

12. Use of the biocide composition according to any one of claims 1 to 11 for in-can preservation.

13. Use of the biocide composition according to claim 12 for in-can preservation of lignosulfonates, starch preparations, coating compositions such as paints, varnishes and plasters, polymer dispersions, emulsions, latexes, and adhesives.

14. Preserved product comprising a biocidal composition as described in any one of claims 1 to 11.

15. Preserved product according to claim 14 selected from lignosulphonates and starch preparations in coating compositions, paints, varnishes, glazes and plasters, emulsions, latices, polymer dispersions, chalk suspensions, mineral slurries, ceramic masses, adhesives, fragrances, casein products, starchy products, bitumen emulsions, surfactant solutions, fuels, cleaning agents, pigment pastes and pigment dispersions, inks, lithographic fluids, thickeners, cosmetic products, toiletries, water circuits, liquids in wood processing, liquids in the oil production, liquids associated with paper processing, liquids in leather production, liquids in textile production, drilling and cutting oils, hydraulic fluids, and coolants.

**Revendications**

1. Composition biocide contenant du glutaraldehyde et en tant que constituant(s) supplémentaire(s) un ou plusieurs dérivés d'isothiazolin-3-one choisis dans le groupe constitué par les N-alkyl-1,2-benzisothiazolin-3-ones et la 2-n-octylisothiazolin-3-one (OIT).

2. Composition biocide selon la revendication 1, dans laquelle le ou les dérivés d'isothiazolin-3-one sont choisis parmi la N-méthyl-1,2-benzisothiazolin-3-one, la N-n-butyl-1,2-benzisothiazolin-3-one et la 2-n-octylisothiazolin-3-one.

3. Composition biocide selon la revendication 1 ou 2, dans laquelle au moins un des dérivés d'isothiazolin-3-one est inclus dans des microcapsules.

4. Composition biocide selon la revendication 3, dans laquelle les microcapsules comprennent une résine aminoplaste en tant que matériau de capsule.

5. Composition biocide selon l'une quelconque des revendications 1 à 4, **caractérisée en ce que** le ou les dérivés d'isothiazolin-3-one et le glutaraldéhyde sont présents en un rapport en poids de (1 à 100) : (1 à 400).

6. Composition biocide selon la revendication 1 ou 2, **caractérisée en ce que** celle-ci contient le glutaraldehyde et le dérivé d'isothiazolin-3-one ou les dérivés d'isothiazolin-3-one en une concentration totale de 5 à 50 % en poids par rapport à la composition biocide totale.

7. Composition biocide selon l'une quelconque des revendications 1 à 6, **caractérisée en ce qu'**elle comprend un milieu polaire et/ou apolaire.

8. Composition biocide selon l'une quelconque des revendications 1 à 7, **caractérisée en ce qu'**elle comprend en tant que milieu liquide polaire de l'eau, un alcool aliphatique de 1 à 4 atomes de carbone, un glycol, un éther de glycol, un ester de glycol, un polyéthylène glycol, un polypropylène glycol, le N,N-diméthylformamide, le monoisobutyrate de 2,2,4-triméthylpentanediol ou un de leurs mélanges.

9. Composition biocide selon l'une quelconque des revendications 1 à 8, **caractérisée en ce qu'**elle comprend en tant que milieu polaire de l'eau ou un glycol ou un mélange de ceux-ci.

10. Composition biocide selon l'une quelconque des revendications 1 à 9, **caractérisée en ce que** la composition présente un pH de 3 à 6.

11. Composition biocide selon l'une quelconque des revendications 1 à 10, **caractérisée en ce qu'**elle se présente sous la forme d'une préparation liquide.

12. Utilisation de la composition biocide selon l'une quelconque des revendications 1 à 11 pour la conservation en récipients.

13. Utilisation de la composition biocide selon la revendication 12 pour la conservation en récipients de sulfonates de lignine, de préparations d'amidon, d'agents de revêtement tels que des peintures, des vernis et des enduits, de dispersions polymères, d'émulsions, de latex et d'adhésifs.

14. Produit conservé, contenant une composition biocide telle que décrite dans l'une quelconque des revendications 1 à 11.

15. Produit conservé selon la revendication 14, choisi parmi les sulfonates de lignine et les préparations d'amidon dans des agents de revêtement, des peintures, des vernis, des glacis et des enduits, des émulsions, des latex, des dispersions polymères, des suspensions de craie, des suspensions minérales des masses céramiques, des adhésifs, des parfums, des produits contenant de la caséine, des produits contenant de l'amidon, des émulsions de bitume, des solutions de tensioactifs, des combustibles, des agents de nettoyage, des pâtes de pigment et des dispersions de pigment, des encres, des liquides lithographiques, des épaississants, des produits cosmétiques, des articles de toilette, des circuits d'eau, des liquides dans l'usinage du bois, des liquides dans l'extraction de pétrole, des liquides dans l'usinage de papier, des liquides dans la fabrication de cuir, des liquides dans la fabrication de textiles, des huiles de forage et de coupe, des liquides hydrauliques et des huiles de refroidissement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0676140 A1
- EP 1005271 B1
- EP 1030558 B1
- EP 0393948 A1
- WO 2004000953 A

**In der Beschreibung aufgeführte Nicht-Patentliteratur**

- **F.C. KULL et al.** *Applied Microbiology,* 1961, vol. 9, 538